Europäisches Patentamt

European Patent Office

Office européen des brevets

(19)

(11) **EP 1 050 611 B1**

(12) **EUROPEAN PATENT SPECIFICATION**

(45) Date of publication and mention
of the grant of the patent:
**28.07.2004 Bulletin 2004/31**

(51) Int Cl.⁷: **D03D 47/36**, B65H 51/22

(21) Application number: **00109088.5**

(22) Date of filing: **03.05.2000**

(54) **Method and device for automatically adjusting the asynchronous motor for actuation of the weft winding arm in weft feeders for textile machines**

Verfahren und Vorrichtung zur automatischen Regelung eines Asynchronmotors zum Antrieb des Fadenzuführungsrohrs in Liefervorrichtungen für Textilmaschinen

Procédé et dispositif pour l'ajustement automatique d'un moteur asynchrone pour l'actionnement du bras d'enroulement de fil de trame dans les fournisseurs de trame pour machines textiles

(84) Designated Contracting States:
**BE CH DE LI SE**

(30) Priority: **07.05.1999 IT TO990370**

(43) Date of publication of application:
**08.11.2000 Bulletin 2000/45**

(73) Proprietor: **L.G.L. Electronics S.p.A.**
**24024 Gandino (Bergamo) (IT)**

(72) Inventors:
• **Zenoni, Pietro**
  **24026 Leffe, (Prov. of Bergamo) (IT)**
• **Pedrini, Giovanni**
  **24026 Leffe, (Prov. of Bergamo) (IT)**
• **Gotti, Luca**
  **24021 Albino, (Prov. of Bergamo) (IT)**

(74) Representative: **Modiano, Guido, Dr.-Ing. et al**
**Spandonari & Modiano S.r.l.,**
**Corso Duca degli Abruzzi, 16**
**10129 Torino (IT)**

(56) References cited:
**US-A- 4 663 942** **US-A- 4 739 942**

## Description

The present invention relates to a method and a device for automatically adjusting the asynchronous motor for actuation of the weft winding arm in weft feeders for textile machines, particularly weaving looms.

Conventional weft feeders are devices provided with a fixed drum on which a weft winding arm, of the windmilling type, winds a plurality of turns which constitute a weft reserve which unwinds from the drum, when requested by the loom, at each weft insertion beat.

Currently, the most widely used type of motor for turning said windmilling arm of said feeders is the asynchronous motor (see e.g. US-A-4 739 942). Said widespread choice is determined by various factors, the most important of which are the low purchase, running and maintenance costs of these motors, which arise from their structural simplicity and in particular from the absence of sliding parts subject to rapid wear. Moreover, the evolution of semiconductor technology has made available programmable systems, or microcontrollers, which integrate corresponding peripherals capable of generating waveforms for signals for the direct control of the inverters that drive said motors, where the term "inverter" designates the conventional devices suitable to generate a system of multiple-phase sinusoidal voltages whose amplitude and frequency can be varied at will.

The voltages and frequencies with which the inverter supplies the motor are normally mutually linked by a function which is matched by a V/F "characteristic" in terms of voltage-frequency, whose behavior is characterized by an initial linear ramp which, as the frequency rises from zero to the nominal value $fn$, determines a corresponding increase in the voltage from a minimum value ($V0 \neq 0$) up to a nominal value Vn.

In order to contain the losses in the magnetic circuit to acceptable values, said nominal value Vn is then kept constant as the frequency rises beyond its nominal value $fn$ and up to a maximum value $f_{max}$. Accordingly, the magnetic flux and the driving torque produced by the motor decrease proportionally and in the region between the nominal frequency $fn$ and the maximum frequency $f_{max}$ the motor runs at constant power.

This adjustment characteristic is sufficient in most cases but can be inadequate or at least not completely satisfactory in controlling the motor that actuates the windmilling weft winding arm of the above specified weft feeders.

In the case of weft feeders, the motor adjustment system must in fact take into account various variables, and mainly:

a) the mechanical load applied to the motor shaft by the windmilling arm, which is variable and depends, to a significant extent, on the sliding friction of the thread on the end bush of the arm, on the type of weft thread, on the degree of braking applied to the thread at the inlet of the feeder, on the shape of the spool on which the weft thread is wound, and on the degree of filling of said spool;

b) the temperature-dependent variations of the electrical parameters of the motor, particularly the variation in rotor resistance;

c) the inevitable variations in the air gap;

d) the variations in the friction resistances that act on the driving shaft and are caused by the wear of the supporting bearings and by the different value of the rolling friction of said bearings as the temperature varies and/or in case of penetration of foreign objects, dust and the like;

e) the variations in the supply voltage.

Conventional adjustment systems approximately take into account the above-described variable factors by choosing V/F adjustment characteristics which are oversized with respect to the requirements of the motor used.

This entails considerable drawbacks, because in most cases the power supply absorbs more power than necessary, dissipating the excess power as heat, while in some specific cases, when the motor is required to deliver significantly higher power peaks, the chosen V/F characteristic, despite being oversized, can be unsuitable to cope with the request for said momentary high power. In this case, the windmilling arm meant to replenish the weft reserve can stop, or at least significantly reduce its rotation rate, causing, over a more or less extended period, the complete depletion of said reserve.

The aim of present invention, in view of said severe drawbacks, is to eliminate them, and within the scope of this general aim the invention has the following particular important objects:

-- to provide an adjustment method and device which are suitable to automatically adjust the voltage-frequency characteristic during the operation of said motor of the windmilling arm at a substantially constant speed;

-- to provide an automatic adjustment method and device which are substantially insensitive to the above-described variables;

-- to provide an adjustment method and device which are suitable to minimize - compatibly with the power actually required by the operating conditions - the heating of the power supply, avoiding its overheating in any case;

-- to provide a method and a device which are capable of minimizing the stresses of the electronic components of the adjustment and power supply system of the motor, particularly of the components of the power section of the driving means (inverter) of said motor, and of also reducing the mechanical stresses that act on the feeder as a consequence of the excess power delivered by said motor.

According to the present invention, these and other important objects which will become better apparent from the following detailed description are achieved with an adjustment method and device which has the specific characteristics stated in the appended claims.

Substantially, the invention is based on the concept of automatically varying the V/F voltage-frequency characteristic in order to deliver the electric power that is actually required and which corresponds to the load actually applied to the power supply in the various operating conditions. This is achieved, according to the invention, with an adjustment method and device in which the V/F voltage-frequency characteristic curve is taken as an actuation variable, giving it the role of a numeric index which is suitable to identify, by choosing it in a set, the characteristic curve that is suitable for the current operating conditions; the controlled variable being constituted by the slip of the asynchronous motor that moves the windmilling arm of the weft feeder.

In the present description, the expression "actuation variable" designates the variable that the adjustment process varies within preset limits in order to make the variable to be controlled coincide with the reference of the adjustment system.

Further characteristics and advantages of the method and device according to the present invention will become better apparent from the following detailed description of preferred embodiments thereof, illustrated only by way of non-limitative example in the accompanying drawings, wherein:

-- Figure 1 is a chart which shows a set of V/F characteristic curves, among which the method and the device according to the present invention choose the curve suitable for the current operating conditions;

-- Figure 2 is a block diagram of the device for performing the method for automatically selecting the suitable characteristic among the set of characteristics of Figure 1.

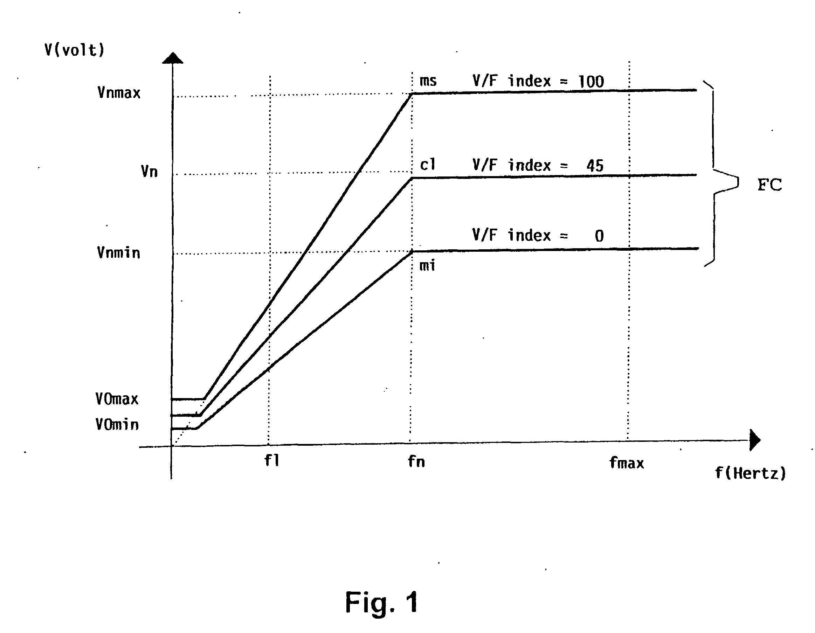

Initially with reference to Figure 1, the reference sign FC designates a set of V/F voltage-frequency characteristic curves, each of which comprises a linear ramp, which ranges - for a range of frequencies which can vary between 0 (zero) and the nominal value $fn$ - between a minimum but nonzero voltage value V0 (V0 ≠ 0) and a respective nominal value Vn. Said FC set of characteristic curves accordingly covers an area that lies between an upper limit $ms$, delimited by the ordinate related to the maximum nominal value $Vn_{max}$ of the voltage, and a bottom limit $mi$, which is delimited by the ordinate related to the minimum nominal value $Vn_{min}$ of said voltage.

A numeric index $V/F_{index}$ which can vary between 0 (zero) and 100 is associated with the collection of curves that compose the FC set; by way of example, the chart shows an intermediate characteristic curve C1 with which the index $V/F_{index}$ = 45 is associated.

The ratio $V/F_{index}$ accordingly identifies, by linear interpolation, one and only one of the characteristic curves that belong to the FC set.

According to the present invention, the method for automatically adjusting the motor of the weft winding arm of the feeder consists in choosing, within the FC set and according to the slip of said motor, the characteristic curve whose index $V/F_{index}$ corresponds to the actual operating conditions of said feeder.

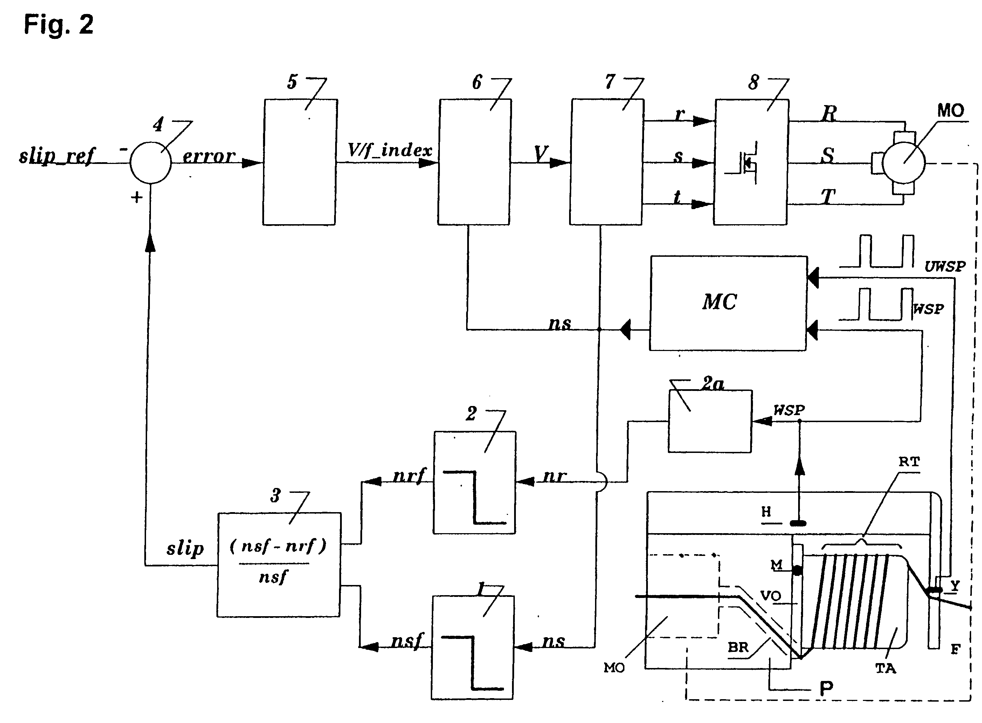

The device shown schematically in terms of function blocks in Figure 2 is provided, according to the invention, for this purpose; said figure illustrates the weft feeder P, which comprises: the weft winding arm BR of the windmilling type, which is driven by a motor MO of the three-phase asynchronous type suitable to wind onto the drum of the feeder P a plurality of turns of thread F that constitute a weft reserve RT; a first sensor H, typically a magnetic one, which is sensitive to the passage of a magnet M carried by a flywheel VO which is associated with the arm BR; and a second sensor Y, for example a piezoelectric one, which is arranged at the output of the feeder P and is sensitive to the passage of the turns that unwind from the drum TA of the feeder P. The first sensor H generates a pulsed signal WSP at each passage of the magnet M and the second sensor Y generates a pulsed signal UWSP at the passage of each turn that unwinds from the drum TA.

Both of said signals are sent to a supervisor microcontroller MC, which corresponds to the synchronization speed of the motor MO. A logic block 2a further processes only the signal WSP and extracts a signal $nr$ (numeric variable) which corresponds to the real rotation rate of the motor MO, setting $nr = 60 / \Delta t$, where $\Delta t$ represents the time interval between the two last and successive pulses of the signal WSP.

As clearly shown in the figure, the two signals $ns$ and $nr$ are sent to respective low-pass filters 1-2, from which corresponding filtered signals $nsf$ and $nrf$ are output. Said filtered signals are processed in a subsequent functional block which obtains a slip data item $slip$, where:

$$slip = (nsf - nrf/nsf).$$

The slip signal or data item $slip$ is then sent to a block 4 which acts as a subtractor and performs the subtraction $slip-(slip\text{-}ref)$ , obtaining in output a variable $error$, where $slip\text{-}ref$ is a reference coefficient whose value lies between 0.04 and 0.1 and is chosen according to the dimensions of the motor MO and to the degree of maximum heating allowed for the feeder P and is smaller for lower heating temperatures and larger motors.

The $error$ variable that is present at the output of said subtractor block 4 constitutes the input data item of a conventional PID (proportional + integral + derivative) regulator block 5, widely used to regulate linear systems in particular, whose output signal, in numeric terms, represents the numeric index $V/F_{index}$ used to select the characteristic with which the motor MO is to be supplied.

A subsequent functional block 6, by receiving in input both the numeric value of the index $V/F_{index}$ and the signal that corresponds to the synchronization speed *ns* (which is proportional to the supply frequency and to the number of pole pairs), generates the effective value of the voltage V to be applied to the motor MO. Then a subsequent block 7, starting from the signal that represents the voltage V and from the signal *ns* that corresponds to the synchronization speed, generates a set of three low-voltage signals *r-s-t* which the subsequent block 8 - which represents the power section of the inverter — transfers to the voltage and current levels suitable to drive the terminals R-S-T of the asynchronous motor MO.

Without altering the concept of the invention, the details of execution and the embodiments may of course be altered extensively with respect to what has been described and illustrated by way of non-limitative example without thereby abandoning the scope of the invention.

In particular, the function blocks 3, 4, 5, 6 and 7 may be provided by wired logic systems (hardware) and by programming a digital microprocessor-based control system (software).

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

**Claims**

1. A method for automatically adjusting the asynchronous motor (MO) for moving the weft winding arm (BR) in weft feeders (P) for textile machines, **characterized in that** it consists in taking the voltage-frequency characteristic curve (V/F) of the motor (MO) as an actuation variable, giving it the role of a numeric index ($V/F_{index}$) which is suitable to identify, by choosing it in a set (FC), the characteristic curve that is suitable for the current operating conditions; the controlled variable being constituted by the slip of the motor (MO) that moves said weft winding arm (BR).

2. The adjustment method according to claim 1, **characterized in that** said set (FC) of characteristic curves lies in a region between an upper limit, which is delimited by the ordinate related to the maximum nominal value ($Vn_{max}$) of the voltage supplied to the motor (MO), and a lower limit, which is delimited by the ordinate related to the minimum nominal value ($Vn_{min}$) of said voltage.

3. The adjustment method according to claims 1 or 2, **characterized in that** said numeric index ($V/F_{index}$) is variable between 0 (zero) and 100 and identifies, by linear interpolation, one and only one of the characteristic curves that belong to said set (FC).

4. The device for performing the method for automatically adjusting the asynchronous motor for moving the weft winding arm (BR) of weft feeders (P) according to claims 1 to 3, **characterized in that** it comprises: a logic block (2a) which processes the pulsed signal (WSP) that arrives from a first sensor (H) of the feeder (P) in order to obtain from said pulsed signal (WSP) a signal (*nr*) which corresponds to the real rotation rate at the motor (MO) of the weft winding arm (BR); a microcontroller (MC) which processes said first signal (WSP) that arrives from the first sensor (H) and, simultaneously, a second pulsed signal (UWSP) which arrives from a second sensor (Y) of the feeder (P) in order to obtain a signal (*ns*) which corresponds to the synchronization speed of said motor (MO), said signals (*nr-ns*) that correspond to the real and synchronization speeds being applied, after processing in respective low-pass filters (1-2), to a functional block (3), which processes the processed signals (nrf, nsf) in order to obtain a slip data item (*slip*) from which a numeric reference coefficient (*slip-ref*) is subtracted and a numeric variable (*error*) is generated which constitutes the input data item of a regulator (5) of the PID type, whose output signal, also generated as a numeric variable, represents the numeric index ($V/F_{index}$) used to choose the characteristic with which said asynchronous motor (MO) is to be supplied.

5. The device according to claim 4, **characterized in that** said first sensor (H) of the feeder (P), for example of the magnetic type, is sensitive to the passage of a magnet (M) which rotates rigidly with the weft winding arm (BR) and said second sensor (Y), for example of the piezoelectric type, is sensitive to the passage of the turns of thread (F) that unwind from the drum (TA) of the feeder (P).

6. The device according to claims 4 or 5, **characterized in that** said numeric index ($V/F_{index}$) and said signal (*ns*) that corresponds to the synchronization speed of the motor (MO) constitute the input data of a functional block (6) which processes said index ($V/F_{index}$) and signal (ns) in order to obtain the effective value (V) of the voltage to be applied to the motor (MO); said effective value (V) being sent, together with said synchronization speed signal (*ns*), to an additional functional block (7) which is suitable to generate a set of three low-voltage signals (*r-s-t*) which a power section (8) transfers to voltage and current levels which are suitable to drive the terminals (R-S-T) of the asynchronous motor (MO).

7. The device according to claim 4, **characterized in that** said numeric comparison coefficient (*slip-ref*) is between the values 0.04 and 0.1 and is chosen, within said limits, according to the dimensions of the motor (MO) and to the maximum degree of heating allowed for the feeder (P).

**Patentansprüche**

1. Verfahren zur automatischen Regelung eines Asynchronmotors (MO) zum Antrieb des Schussspularmes (BR) in Schusszufuhrvorrichtungen (P) für Textilmaschinen, **dadurch gekennzeichnet, dass** es darin besteht, dass eine Spannung - Frequenz - Kennlinie (V/F) des Motors (MO) als eine Stellvariable verwendet wird, dass ihr die Rolle eines numerischen Indexes (V/F$_{index}$) zugeordnet wird, welcher geeignet ist, die Kennlinie, die für die geltenden Betriebsbedingungen passend ist, durch Auswahl aus einer Gruppe (FC) herauszufinden, wobei die geregelte Variable durch den Schlupf des Motors (MO), der besagten Schussspularm (BR) antreibt, festgelegt wird.

2. Regelverfahren nach Anspruch 1, **dadurch gekennzeichnet, dass** besagte Gruppe (FC) von Kennlinien in einem Bereich liegt zwischen einem oberen Grenzwert, der durch die Ordinate bezogen auf den maximalen Nominalwert (Vn$_{max}$) der an den Motor angelegten Spannung begrenzt wird, und einem unteren Grenzwert, der durch die Ordinate bezogen auf den minimalen Nominalwert (Vn$_{min}$) der besagten Spannung begrenzt wird.

3. Regelverfahren nach Anspruch 1 oder 2, **dadurch gekennzeichnet, dass** besagter numerischer Index (V/F$_{index}$) zwischen 0 (Null) und 100 variabel ist und eine einzige der Kennlinien, die zu besagter Gruppe (FC) gehört, durch lineare Interpolation herausfindet.

4. Vorrichtung zur Ausführung des Verfahrens zur automatischen Regelung eines Asynchronmotors zum Antrieb des Schussspularmes (BR) von Schusszufuhrvorrichtungen (P) nach den Ansprüchen 1 bis 3, **dadurch gekennzeichnet, dass** es umfasst: einen Logikblock (2a), der das gepulste Signal (WSP) verarbeitet, welches von einem ersten Sensor (H) der Zufuhrvorrichtung (P) kommt, um von besagtem gepulsten Signal (WSP) ein Signal (*nr*) zu erhalten, welches zum tatsächlichen Rotationswert am Motor (MO) des Schussspularmes (BR) korrespondiert; einen Mikrokontroller (MC), der besagtes erstes Signal (WSP), das vom ersten Sensor (H) kommt, und gleichzeitig ein zweites gepulstes Signal (UWPS), das von einem zweiten Sensor (Y) der Zufuhrvorrichtung (P) kommt, verarbeitet, um ein Signal (*ns*) zu erhalten, welches zur Synchronisationsgeschwindigkeit des besagten Motors (MO) korrespondiert, wobei besagte Signale (*nr-ns*), die zur tatsächlichen Geschwindigkeit und zur Synchronisationsgeschwindigkeit korrespondieren, nach einer Verarbeitung in entsprechenden Tiefpassfiltern (1-2) an einen funktionalen Block (3) gelegt werden, welcher die verarbeiteten Signale (nrf, nsf) verarbeitet, um ein Schlupfdatenelement (*slip*) zu erhalten, von dem ein numerischer Referenzkoeffizient (*slip-ref*) subtrahiert und eine numerische Variable (*error*) generiert wird, welche das Eingabedatenelement eines Reglers (5) vom PID-Typ festlegt, dessen Ausgangssignal, ebenfalls als numerische Variable generiert, den numerischen Index (V/F$_{index}$) darstellt, welcher verwendet wird, um die Kennlinie zu wählen, mit welcher besagter Asynchronmotor (MO) versorgt werden muss.

5. Vorrichtung nach Anspruch 4, **dadurch gekennzeichnet, dass** besagter erster Sensor (H) der Zufuhrvorrichtung (P), der beispielsweise magnetischen Typs ist, auf den Durchgang eines Magnets (M), der starr mit dem Schussspularm (BR) rotiert, sensitiv ist, und dass besagter Sensor (Y), der beispielsweise piezoelektrischen Typs ist, auf den Durchgang der Fadenwicklungen (F), die sich von der Trommel (TA) der Zufuhrvorrichtung (P) abwickeln, sensitiv ist.

6. Vorrichtung nach Anspruch 4 oder 5, **dadurch gekennzeichnet, dass** besagter numerischer Index (V/F$_{index}$) und besagtes Signal (*ns*), das zur Synchronisationsgeschwindigkeit des Motors (MO) korrespondiert, die Eingangsdaten eines funktionalen Blocks (6) festlegen, welcher besagten Index (V/F$_{index}$) und besagtes Signal (*ns*) verarbeitet, um den Effektivwert (V) der Spannung, die an den Motor (MO) angelegt wird, zu erhalten, wobei besagter Effektivwert (V) zusammen mit besagtem Synchronisationsgeschwindigkeitssignal (*ns*) an einen zusätzlichen funktionalen Block (7) gesandt wird, welcher geeignet ist, einen Satz von drei Niederspannungssignalen (*r-s-t*) zu generieren, welche ein Leistungsglied (8) in einen Spannungswert und einen Stromwert umsetzt, die geeignet sind, die Anschlüsse (R-S-T) des Asynchronmotors (MO) anzusteuern.

7. Vorrichtung nach Anspruch 4, **dadurch gekennzeichnet, dass** besagter numerischer Vergleichskoeffizient (*slip-ref*) zwischen den Werten 0,04 und 0,1 liegt und innerhalb dieser Grenzwerte entsprechend der Größenordnungen des Motors (MO) und des maximalen Grades der Erwärmung, die für die Zufuhrvorrichtung (P) erlaubt ist, gewählt wird.

**Revendications**

1. Procédé pour régler automatiquement le moteur asynchrone (MO) destiné à mettre en mouvement le bras (BR) d'enroulement de trame dans des fournisseurs (P) de trame pour des machines textile, **caractérisé en ce qu'**il consiste à prendre en compte la courbe caractéristique tension-fréquence (V/F) du moteur (MO) en tant que paramètre de commande, lui attribuer la fonction d'un indice numérique (V/$F_{index}$) apte à identifier, en la choisissant parmi un jeu (FC), la courbe caractéristique qui est adaptée pour les conditions de fonctionnement en cours ; le paramètre contrôlé étant constitué par le glissement du moteur (MO) qui met en mouvement ledit bras (BR) d'enroulement de trame.

2. Procédé de réglage selon la revendication 1, **caractérisé en ce que** ledit jeu (FC) de courbes caractéristiques se trouve dans une région comprise entre une limite supérieure, délimitée par l'ordonnée correspondant à la valeur nominale maximum (V$n_{max}$) de la tension fournie au moteur (MO), et une limite inférieure, délimitée par l'ordonnée correspondant à la valeur nominale minimum (V$n_{min}$) de ladite tension.

3. Méthode de réglage selon les revendications 1 ou 2, **caractérisée en ce que** ledit indice numérique (V/$F_{index}$) est variable entre 0 (zéro) et 100 et identifie, par interpolation linéaire, une et une seule des courbes caractéristiques appartenant audit jeu (FC).

4. Dispositif pour la mise en oeuvre du procédé pour régler automatiquement le moteur asynchrone destiné à mettre en mouvement le bras (BR) d'enroulement de trame de fournisseurs de trame (P) selon les revendications 1 à 3, **caractérisé en ce qu'**il comprend : un bloc logique (2a) qui traite le signal d'impulsions (WSP) provenant depuis un premier capteur (H) du fournisseur (P) de façon à obtenir à partir dudit signal d'impulsions (WSP) un signal (nr) qui correspond au taux de rotation réel du moteur (MO) du bras (BR) d'enroulement de trame ; un microcontrôleur (MC) qui traite ledit premier signal (WSP) provenant depuis le premier capteur (H) et, simultanément, un second signal d'impulsions (UWSP) provenant depuis un second capteur (Y) du fournisseur (P) de façon à obtenir un signal (ns) qui correspond à la vitesse de synchronisation dudit moteur (MO), lesdits signaux (nr-ns) qui correspondent aux vitesses réelle et de synchronisation étant appliqués, après traitement par des filtres passe-bas respectifs (1 - 2), à un bloc fonctionnel (3), qui traite les signaux traités (nrf, nsf) de façon à obtenir un élément de données de glissement (slip) à partir duquel on soustrait un coefficient de référence numérique (slip-ref) et on génère un paramètre numérique (error) qui constitue l'élément de données d'entrée d'un régulateur (5) de type PID, dont le signal de sortie, également généré en tant que paramètre numérique, représente l'indice numérique (V/$F_{index}$) utilisé pour choisir la caractéristique avec laquelle ledit moteur asynchrone (MO) doit être alimenté.

5. Dispositif selon la revendication 4, **caractérisé en ce que** ledit premier capteur (H) du fournisseur (P), par exemple de type magnétique, est sensible au passage d'un élément magnétique (M) qui est mis en rotation solidairement avec le bras (BR) d'enroulement de trame et ledit second capteur (Y), par exemple de type piézoélectrique, est sensible au passage des spires de fil (F) qui se déroulent à partir du tambour (TA) du fournisseur (P).

6. Dispositif selon les revendications 4 ou 5, **caractérisé en ce que** ledit indice numérique (V/$F_{index}$) et ledit signal (ns) qui correspond à la vitesse de synchronisation du moteur (MO) constituent les données d'entrée d'un bloc fonctionnel (6) qui traite ledit indice (V/$F_{index}$) et ledit signal (ns) de façon à obtenir la valeur effective (V) de la tension à appliquer au moteur (MO) ; ladite valeur effective (V) étant transmise, conjointement avec ledit signal de vitesse de synchronisation (ns) à un bloc fonctionnel additionnel(7) apte à générer un jeu de trois signaux basse tension (r-s-t) qu'un étage de puissance (8) transforme en des niveaux de tension et de courant adaptés pour attaquer les bornes (R-S-T) du moteur asynchrone (MO).

7. Dispositif selon la revendication 4, **caractérisé en ce que** ledit coefficient de comparaison numérique (slip-ref) est compris entre les valeurs 0,04 et 0,1 et est choisi, à l'intérieur desdites limites, en fonction des dimensions du moteur (MO) et du degré maximum d'échauffement permis pour le fournisseur (P).

Fig. 1

EP 1 050 611 B1

Fig. 2